# EUROPÄISCHE PATENTSCHRIFT

(11) **EP 1 442 861 B1**
(45) Veröffentlichungstag und Bekanntmachung des Hinweises auf die Patenterteilung: **05.12.2007**
(21) Anmeldenummer: 04100375.7
(22) Anmeldetag: 03.02.2004
(51) Int. Cl.: B28D 1/12, B27B 33/08, B23D 61/02

(54) **Schneidblatt mit Geräuschdämpfungsbohrung**
Cutting blade with holes for noise reduction
Lame de coupe avec des trous pour la réduction de bruit

(30) Priorität: 03.02.2003 DE 10304162
(43) Veröffentlichungstag der Anmeldung: 04.08.2004
(73) Patentinhaber: HILTI Aktiengesellschaft, 9494 Schaan (LI)
(72) Erfinder: Spangenberg, Rolf, 82131 Gauting (DE)
(74) Vertreter: Wildi, Roland

(56) Entgegenhaltungen:
- EP-A- 1 099 524
- EP-A- 1 340 593
- DE-U- 8 304 110
- US-A- 5 802 947

## Beschreibung

Die Erfindung betrifft ein scheibenförmiges Schneidblatt, insbesondere für handgeführte Trenngeräte, mit mehreren am Umfang des Schneidblattes angeordneten Schneidsegmenten, einer Zentrumsbohrung zur Befestigung des Schneidblattes an einem kraftbetriebenen Arbeitsgerät und einer Mittellochung, die eine Vielzahl von Bohrungen aufweist und zwischen der Zentrumsbohrung und den Schneidsegmenten angeordnet ist.

Derartige Schneidblätter kommen beispielsweise in Winkelschleifern oder Sägen zum Einsatz. Häufig werden die Schneidblätter dabei als Diamanttrennscheiben ausgeführt und im Trockenschnittverfahren angewandt. Bei derartigen Anwendungen kommt es in der Regel zu einer starken Lärmbelastung für den Anwender, die bis etwa 120 dB (A) reichen kann. An vielen bekannten Schneidblättern werden daher Durchtrittsöffnungen ausgeführt, die eine Lärmreduktion bewirken sollen.

EP 1 099 524 beschreibt eine Diamant-Trennscheibe, die sowohl zur besseren Wärmeableitung als auch zur Minimierung von Geräuschen eine Vielzahl von Bohrungen aufweist, die auf mehreren Spirallinien angeordnet sind. Zudem bewirkt die grosse Anzahl der Durchbrüche im Betrieb eine gewisse Transparenz der Trennscheibe, die dem Bediener grössere Kontrollmöglichkeiten verschaffen soll.

Eine derartige Anordnung von Durchbrüchen hat den Nachteil, dass das Schneidblatt deutlich geschwächt wird. Demzufolge erreichen derartige Schneidblätter häufig nicht die im Betrieb notwendige Steifigkeit, was zu einer geringeren Schnittleistung führt, beziehungsweise zum Verklemmen des Blattes im Schnitt.

Der vorliegenden Erfindung liegt die Aufgabe zugrunde, bei einem Schneidblatt die vorgenannten Nachteile zu vermeiden und eine grössere Lärmreduktion zu erzielen.

Erfindungsgemäss wird die Aufgabe dadurch gelöst, dass alle Bohrungen der Mittellochung in mindestens zwei voneinander Bohrungsgruppen angeordnet sind, wobei die einer Bohrungsgruppe (12) angehörenden Bohrungen (14) näher an den jeweils benachbarten Bohrungen (14) der gleichen Bohrungsgruppe (12) angeordnet sind als gegenüber Bohrungen (14) einer anderen Bohrungsgruppe (12) und wobei alle Bohrungen jeweils einer beabstandeten Bohrungsgruppe auf den Knotenpunkten eines spiralförmig gekrümmten Gitters angeordnet sind, das mindestens drei Spiralabschnitte aufweist. Bei dieser Anordnung können zwischen den Gruppen Bereiche ausgebildet werden, die nicht durch Bohrungen geschwächt sind und somit für eine ausreichende Steifigkeit des Schneidblattes im Betrieb sorgen können. Darüber hinaus wurde mit derartig gruppiert angeordneten Bohrungen die Bildung eines unkritischen Frequenzspektrums und eine erheblich verbesserte Lärmreduktion gegenüber den bisher bekannten Bohrungsanordnungen festgestellt. Die Ursache hierfür liegt voraussichtlich darin, dass die im Betrieb erzeugten Schallwellen, durch den Wechsel zwischen Bereichen mit und ohne Bohrungen gestreut werden. In bestimmten Fällen führen diese Streuungen zu einer destruktiven Interferenz, die eine Verminderung des Lärmpegels zur Folge hat. So konnte bei einem Ausgangswert von 110 dB (A) durch die beschriebene Mittellochung eine Lärmreduzierung von 8 dB (A) erzielt werden.

Dabei ist es besonders günstig, dass das Schneidblatt eine mehrzählige Rotationssymmetrie aufweist und die Anzahl der Bohrungsgruppen mit der Zähligkeit der Rotationssymmetrie übereinstimmt. Durch die Rotationssymmetrie kann der Effekt der schalldämpfend wirkenden Interferenz noch verstärkt werden.

Von Vorteil ist, dass der Abstand des Gitters gegenüber der Zentrumsbohrung in Drehrichtung des Schneidblattes abnimmt, wodurch eine verbesserte Geräuschdämpfung erzielt werden kann. Zudem wird durch diese Anordnung der Bohrungen eine verbesserte Wärmeableitung erzielt.

Vorzugsweise werden die mindestens drei Spiralabschnitte durch gerade Achsabschnitte geschnitten. Durch die Anordnung der Bohrungen auf geraden Achsabschnitten lässt sich der Herstellungsaufwand des Bohrungsgitters reduzieren.

Günstig ist, dass das Gitter durch die Spiralabschnitte und die Achsabschnitte Gitterfelder ausbildet. Dabei nimmt die Fläche der Gitterfelder untereinander sowohl in Richtung der Spiralabschnitte als auch in Richtung der geraden Achsabschnitte mit zunehmender Nähe zur Zentrumsbohrung ab und damit die Dichte der Bohrungen zu. Durch diese zur Zentrumsbohrung hin zunehmend dichte Anordnung der Bohrungen kann eine besonders grosse Schallreduzierung erzielt werden.

Dabei ist es von Vorteil, dass die Abstände benachbarter Bohrungen auf den Spiralabschnitten in Richtung der Zentrumsbohrung abnehmen.

Auch ist es günstig, dass die Abstände benachbarter Bohrungen auf den Achsabschnitten jeweils gleich sind. Hierdurch wird die Herstellung des Schneidblattes vereinfacht.
Günstig ist, dass die Bohrungsgruppen untereinander einen Mindestabstand aufweisen, der mindestens doppelt so gross ist wie die grössten Abstände benachbarter Bohrungen auf den Achsabschnitten. Auf diese Weise erhält man zwischen den Bohrungsgruppen relativ breite ungeschwächte Bereiche, wodurch eine ausreichende Steifigkeit des Schneidblattes im Betrieb sichergestellt wird.

In einer bevorzugten Ausführungsform vergrössern sich die Durchmesser der Bohrungen auf den Spiralabschnitten radial von aussen nach innen in einem Schritt oder in mehreren Schritten. Hierdurch wird die im Betrieb auftretende Überdeckung zwischen den Bohrungen eines Spiralabschnittes vergrössert, was sowohl zu einer Lärmminderung als auch zu einer verbesserten Wärmeableitung führt.

Vorteilhafterweise weisen die Bohrungen einen Durchmesser auf, der zwischen 4,5 und 6,5 mm liegt. Bei diesen Bohrungsdurchmessern konnte bei der speziellen Anordnung der Bohrungen trotz deutlicher Lärmreduzierung eine gute Steifigkeit des Schneidblattes beibehalten werden.

Ferner ist günstig, dass die Mittellochung radial einen Mindestabstand von einem Drittel des Radius des Schneidblattes zu einer Drehachse des Schneidblattes aufweist, wodurch die Stabilität des Schneidblattes weiter erhöht werden kann.

In einer besonders bevorzugten Ausführungsform sind die Schneidsegmente durch Hinterschneidungen am Aussenumfang des Schneidblattes ausgebildet. Dabei ist zwischen jeweils zwei benachbarten Hinterschneidungen eine Zwischenbohrung ausgebildet, wobei die Zwischenbohrungen untereinander unterschiedliche Abstände aufweisen. Hierdurch können schadhafte Spannungen, die zu einer geringeren Standzeit der Schneidsegmente führen, vermieden werden. Gleichzeitig können die Zwischenbohrungen für eine Dämpfung der Schwingungserregung am Umfang des Schneidblattes sorgen, was zu einer zusätzlichen Reduzierung des Lärmpegels beiträgt.

Dabei ist es günstig, dass die Zwischenbohrungen eine Rotationssymmetrie aufweisen. Durch die Rotationssymmetrie kann die schalldämpfend wirkende Interferenz verstärkt werden.

Die Erfindung wird nachstehend anhand eines Ausführungsbeispieles näher erläutert. Es zeigt:
- Fig. 1: eine Ansicht eines erfindungsgemässen Schneidblattes mit gestrichelt dargestelltem imaginären Gitter und
- Fig. 2: eine Ansicht eines erfindungsgemässen Schneidblattes mit unterschiedlichen Bohrungsdurchmessem der Mittelbohrung.

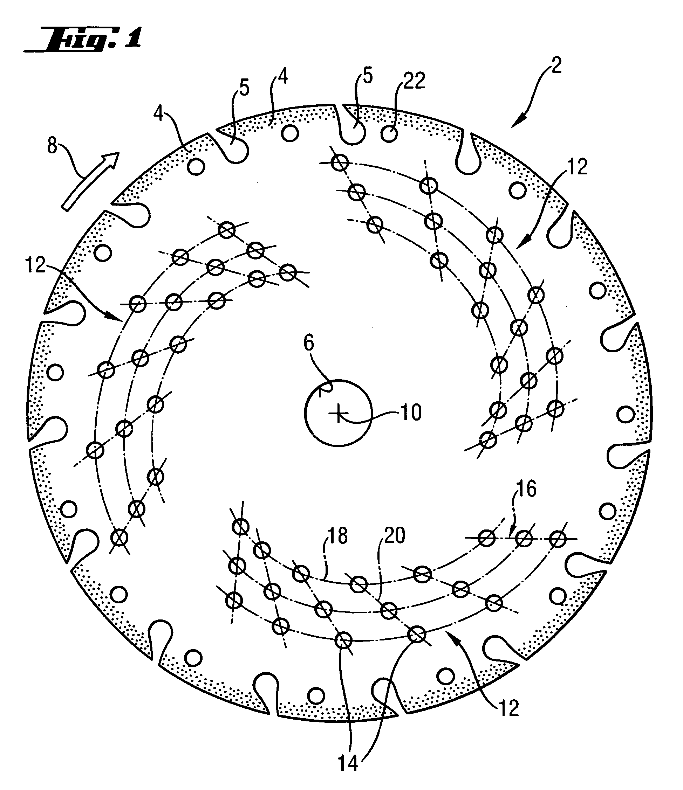

In der Fig. 1 ist ein scheibenförmiges Schneidblatt 2 gezeigt, das an seinem Umfang mehrere Schneidsegmente 4 aufweist. Jedes der Schneidsegmente 4 wird dabei in Umfangsrichtung durch jeweils zwei benachbarte Hinterschneidungen 5 begrenzt. Das Schneidblatt 2 dient beispielsweise zum Trennen und Schneiden von harten Werkstoffen wie beispielsweise Stein, Beton, Metall, usw. Das Schneidblatt 2 kann hierzu beispielsweise als Diamant-Trennscheibe zur Anwendung im Trockenschnittverfahren ausgebildet sein. Hierfür könnten die Schneidsegmente beispielsweise mit abtragenden Diamantkörnchen besetzt sein.

In der Mitte des Schneidblattes 2 ist eine Zentrumsbohrung 6 ausgeformt, über die das Schneidblatt 2 mit einem kraftbetriebenen Arbeitsgerät verbunden werden kann, das das Schneidblatt 2 im Betrieb in eine Drehrichtung 8 um eine Drehachse 10 rotieren lässt.

Zwischen der Zentrumsbohrung 6 und den Schneidsegmenten 4 sind drei Bohrungsgruppen 12 von zylinderförmigen Bohrungen 14 ausgeformt, die insgesamt eine Mittellochung bilden. Die Bohrungen 12 jeder der drei Bohrungsgruppen 14 sind auf den Knotenpunkten eines imaginären, gestrichelt dargestellten Gitters 16 angeordnet, das sich aus jeweils drei Spiralabschnitten 18 zusammensetzt, die durch jeweils sechs geradlinige Achsabschnitte 20 geschnitten werden. Die Spiralabschnitte 18 sind so angeordnet, dass sich jedes der drei Gitter 16 in Drehrichtung der 8 zur Zentrumsbohrung 6 hin krümmt. Dabei nimmt der spitze Winkel zwischen den Achsabschnitten 20 und dem jeweiligen Radius, der durch den Schnittpunkt des jeweiligen Achsabschnittes 20 mit dem Umfang des Schneidblattes 2 geht, von den Achsabschnitten 20 mit den gegenüber der Zentrumsbohrung 6 äusseren Bohrungen 14 zu den Achsabschnitten 20 mit den inneren Bohrungen 14 ab, d.h. die Winkel zwischen den Achsabschnitten 20 und dem jeweils zugehörigen Radius eines Gitters 16 werden in Richtung der Spiralabschnitte 18 zur Zentrumsbohrung hin spitzer. Hierbei weisen die radial innersten Bohrungen 14 jeder Bohrungsgruppe 12 gegenüber der Zentrumsbohrung 6 einen Abstand von etwas mehr als einem Drittel des Radius des Schneidblattes 2 auf.

Ferner sind die Bohrungen 14 eines Gitters 16 so ausgebildet, dass die beiden Abstände zwischen den benachbarten Bohrungen 14 der jeweils drei Bohrungen 14 auf einem Achsabschnitt 20 gleich sind. Dagegen nehmen die Abstände zwischen benachbarten Bohrungen 14 auf allen Spiralabschnitten 18 in Drehrichtung, also mit zunehmender Annäherung an die Zentrumsbohrung 6, ab. Auf diese Weise verdichten sich die Bohrungen in Richtung der Zentrumsbohrung 6 zunehmend.

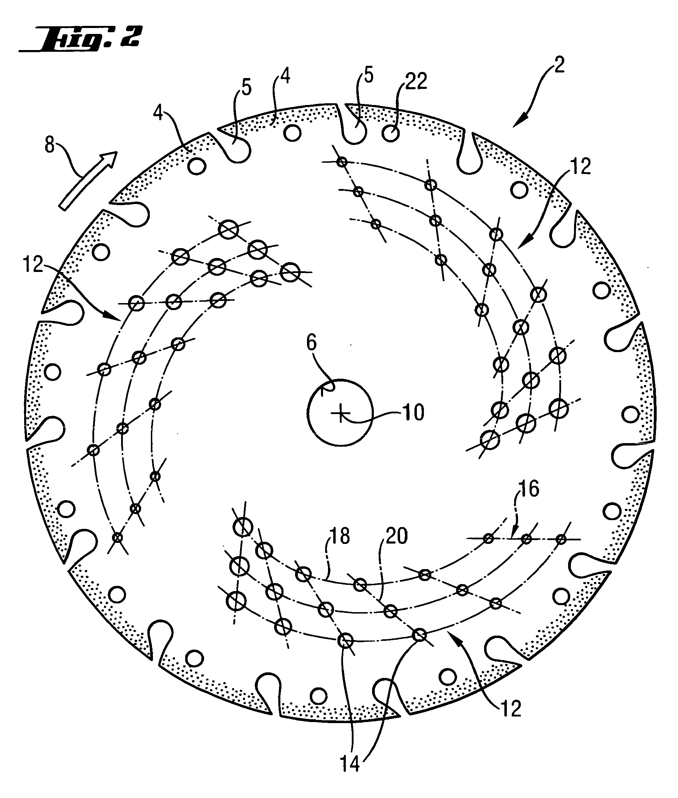

Die Bohrungen 14 der Mittellochung weisen alle einen Durchmesser in einem Grössenbereich von 4,5 bis 6,5 mm auf. In der dargestellten Ausführungsform nach Fig. 1 haben alle Bohrungen den gleichen Durchmesser. Es ist jedoch auch möglich, dass der Durchmesser der Bohrungen 14 eines Spiralabschnittes 18 in Drehrichtung 8 ein - oder mehrmalig oder auch zwischen sämtlichen Bohrungen 14 vergrössert wird, wie in Fig. 2 dargestellt.

Im Bereich der Schneidsegmente 4 ist zwischen benachbarten Hinterschneidungen 5, die jeweils eines der Schneidsegmente 4 ausbilden, jeweils eine Zwischenbohrung 22 ausgeformt. Alle Zwischenbohrungen 22 weisen den gleichen radialen Abstand zur Zentrumsbohrung 6 auf. Untereinander, d.h. in Drehrichtung 8 variieren die Abstände dagegen.

Das dargestellte Schneidblatt 2 weist insgesamt eine dreizählige Rotationssymmetrie auf, d.h. bei Verdrehung des Schneidblattes 2 gegenüber einem Abbild, kommt es mit diesem alle 120° wiederkehrend zur Überdeckung.

Durch die dargestellte spezielle Anordnung sowohl der Bohrungen 14 der Mittellochung als auch der Zwischenbohrungen 22 im Bereich der Schneidsegmente 4 kann eine deutliche Lärmreduzierung beim Betrieb eines handgeführten Trenngerätes bspw. einer Diamant-Trennscheibe im Trockenschnittverfahren erzielt werden. Dabei sorgen einerseits die Zwischenbohrungen 22 für eine Dämpfung der Schwingungserregung am Umfang, die auftritt, sobald die Schneidsegmente 4 in ein zu bearbeitendes Werkstück eindringen. Andererseits wird durch die mehrzählige Rotationssymmetrie, sowohl der Zwischenbohrungen 22 als auch der Bohrungsgruppen 12 der Mittellochung, und ferner durch die spezielle gitterförmige Anordnung der einzelnen Bohrungsgruppen teilweise eine dämpfende Interferenz der erzeugten Schallwellen erzielt, die insgesamt zu einer deutlichen Reduzierung des im Betrieb entstehenden Lärmpegels führt. Darüber hinaus wird bei dem dargestellten Schneidblatt 2 durch die spezielle Anordnung der Mittellochung eine verbesserte Kühlung, eine optimierte Schneidgutabführung sowie eine Gewichtsreduktion erreicht.

## Patentansprüche

1. Schneidblatt, insbesondere für handgeführte Trenngeräte, mit mehreren an einem Aussenumfang des Schneidblatts angeordneten Schneidsegmenten, einer Zentrumsbohrung zur Befestigung des Schneidblattes an einem kraftbetriebenen Arbeitsgerät und einer Mittellochung, die eine Vielzahl von Bohrungen aufweist, die zwischen der Zentrumsbohrung und den Schneidsegmenten angeordnet ist, **dadurch gekennzeichnet, dass** die Bohrungen (14) der Mittellochung in mindestens zwei voneinander beabstandet Bohrungsgruppen (12) angeordnet sind, wobei die einer Bohrungsgruppe (12) angehörenden Bohrungen (14) näher an den jeweils benachbarten Bohrungen (14) der gleichen Bohrungsgruppe (12) angeordnet sind als gegenüber Bohrungen (14) einer anderen Bohrungsgruppe (12) und wobei die Bohrungen (14) jeweils einer Bohrungsgruppe (12) die Knotenpunkte eines spiralförmig gekrümmten Gitters (16) bilden, das mindestens drei Spiralabschnitte aufweist.

2. Schneidblatt nach Anspruch 1, **dadurch gekennzeichnet, dass** das Schneidblatt (2) eine mehrzählige Rotationssymmetrie aufweist und die Anzahl der Bohrungsgruppen (12) mit der Symmetriezähligkeit übereinstimmt.

3. Schneidblatt nach Anspruch 1 oder 2, **dadurch gekennzeichnet, dass** sich das Gitter (16) in Drehrichtung (8) des Schneidblattes (2) der Zentrumsbohrung (6) annähert.

4. Schneidblatt nach einem der Ansprüche 1 bis 3, **dadurch gekennzeichnet, dass** die Knotenpunkte der mindestens drei Spiralabschnitte (18) durch gerade Achsabschnitte (20) geschnitten werden.

5. Schneidblatt nach einem der Ansprüche 1 bis 4, **dadurch gekennzeichnet, dass** das Gitter (16) Gitterfelder ausbildet, deren Flächen untereinander sowohl in Richtung der Spiralabschnitte (18) als auch in Richtung der geraden Achsabschnitte (20) mit zunehmender Nähe zur Zentrumsbohrung (6) abnehmen.

6. Schneidblatt nach Anspruch 4 oder 5, **dadurch gekennzeichnet, dass** die Abstände zwischen benachbarten Bohrungen (14) des selben Spiralabschnittes (18) mit zunehmender Nähe zur Zentrumsbohrung (6) abnehmen.

7. Schneidblatt nach einem der Ansprüche 4 bis 6, **dadurch gekennzeichnet, dass** die Abstände zwischen benachbarten Bohrungen (14) desselben Achsabschnittes (20) gleich sind.

8. Schneidblatt nach einem der Ansprüche 4 bis 7, **dadurch gekennzeichnet, dass** die Bohrungsgruppen (12) untereinander einen Mindestabstand aufweisen, der mindestens doppelt so gross ist wie die grössten Abstände benachbarter Bohrungen (14) auf den Achsabschnitten (20).

9. Schneidblatt nach einem der Ansprüche 4 bis 8, **dadurch gekennzeichnet, dass** sich die Durchmesser der Bohrungen auf den Spiralabschnitten (18) gegenüber der Zentrumsbohrung von aussen nach innen in einem Schritt oder in mehreren Schritten vergrössern.

10. Schneidblatt nach einem der Ansprüche 1 bis 9, **dadurch gekennzeichnet, dass** die Bohrungen (14) einen Durchmesser aufweisen, der zwischen 4,5 und 6,5 mm liegt.

11. Schneidblatt nach einem der Ansprüche 1 bis 10, **dadurch gekennzeichnet, dass** die Mittellochung radial einen Mindestabstand von einem Drittel des Radius des Schneidblattes (2) zu einer Drehachse (10) des Schneidblattes (2) aufweist.

12. Schneidblatt nach einem der Ansprüche 1 bis 11, **dadurch gekennzeichnet, dass** die Schneidsegmente (4) durch Hinterschneidungen (5) am Aussenumfang des Schneidblattes (2) ausgebildet sind und zwischen jeweils zwei benachbarten Hinterschneidungen (5) eine Zwischenbohrung (22) ausgebildet ist, wobei die Zwischenbohrungen (22) untereinander unterschiedliche Abstände aufweisen.

13. Schneidblatt nach Anspruch 12, **dadurch gekennzeichnet, dass** die Zwischenbohrungen (22) eine Rotationssymmetrie aufweisen.

## Claims

1. Cutting blade, in particular for hand controlled separating devices, with several cutting segments fitted on the outer periphery of the cutting blade, a central bore for the attachment of the cutting blade to a power operated work device and a middle boring which exhibits a multitude of bores, which is fitted between the central bore and the cutting segments, **characterised by** the fact that the bores (14) of the middle boring are arranged in at least two bore groups (12) at a distance from each other and where the bores (14) belonging to one bore group (12) are fitted nearer to the in each case neighbouring bores (14) of the same bore group (12) than opposite the bores (14) of another bore group (12) and the bores (14) of in each case a bore group (12) form the junction points of a spiral shaped curved grid (16), which exhibits at least three spiral sections.

2. Cutting blade according to claim 1, **characterised by** the fact that the cutting blade (2) exhibits a multiple rotation symmetry and the number of the bore groups (12) accords with the symmetry numbers.

3. Cutting blade according to claim 1 or 2, **characterised by** the fact that the grid (16) in the direction of rotation (8) of the cutting blade (2) nears the central bore (6).

4. Cutting blade according to one of claims 1 to 3, **characterised in that** the junction points of at least three spiral sections (18) are intersected by straight axis sections (20).

5. Cutting blade according to one of the claims 1 to 4, **characterised by** the fact that the grid (16) forms grid fields, whose surfaces decrease among each other both in the direction of the spiral sections (18) and also in the direction of the straight axis sections (20) with increasing nearness to the central bore (6).

6. Cutting blade according to claim 4 or 5, **characterised by** the fact that the distances between neighbouring bores (14) of the same spiral section (18) decrease with increasing nearness to the central bore (6).

7. Cutting blade according to one of the claims 4 to 6, **characterised by** the fact that the distances between neighbouring bores (14) of the same axis section (20) are equal.

8. Cutting blade according to one of the claims 4-7, **characterised by** the fact that the bore groups (12) exhibit a minimum distance among each other, which is at least double the size of the greatest distance of neighbouring bores (14) on the axis sections (20).

9. Cutting blade according to one of the claims 4 to 8, **characterised by** the fact that the diameters of the bores on the spiral sections (18) opposite the centre bore increase from outside to inside in one step or in several steps.

10. Cutting blade according to one of the claims 1 to 9, **characterised by** the fact that the bores (14) exhibit a diameter which is situated between 4.5 and 6.5 mm.

11. Cutting blade according to one of the claims 1 to 10, **characterised by** the fact that the middle boring exhibits radially a minimum distance of one third of the radius of the cutting blade (2) to an axis of rotation (10) of the cutting blade (2).

12. Cutting blade according to one of the claims 1 to 11, **characterised by** the fact that the cutting segments (4) are formed by undercuts (5) on the outer periphery of the cutting blade (2) and between two neighbouring undercuts (5) an intermediate bore (22) is formed, with the intermediate bores (22) exhibiting different distances among each other.

13. Cutting blade according to claim 1, **characterised by** the fact that the intermediate bores (22) exhibit a rotational symmetry.

## Revendications

1. Lame de coupe, en particulier pour appareils de tronçonnage à main, comprenant plusieurs segments de coupe disposés sur une périphérie extérieure de la lame de coupe, un trou central pour fixer la lame de coupe à un appareil de travail à entraînement motorisé, et une perforation intermédiaire qui comporte une pluralité de trous disposés entre le trou central et les segments de coupe, **caractérisée en ce que** les trous (14) de la perforation intermédiaire sont disposés en au moins deux groupes de trous (12) distants l'un de l'autre, les trous (14) appartenant à un groupe de trous (12) étant disposés plus près des trous voisins (14) du même groupe de trous (12) que des trous (14) d'un autre groupe de trous (12), et les trous (14) de chaque groupe de trous (12) formant les points nodaux d'une grille à courbure spirale (16) qui comporte au moins trois portions spirales.

2. Lame de coupe selon la revendication 1, **caractérisée en ce que** la lame de coupe (2) possède une symétrie de révolution multiple, et le nombre de groupes de trous (12) coïncide avec le multiple de la symétrie.

3. Lame de coupe selon la revendication 1 ou 2, **caractérisée en ce que**, dans le sens de rotation (8) de la lame de coupe (2), la grille (16) se rapproche du trou central (6).

4. Lame de coupe selon une des revendications 1 à 3, **caractérisée en ce que** les points nodaux des portions spirales au nombre d'au moins trois (18) sont coupés par des portions axiales rectilignes (20).

5. Lame de coupe selon une des revendications 1 à 4, **caractérisée en ce que** la grille (16) forme des cases de grille dont l'aire diminue aussi bien dans la direction des portions spirales (18) que dans la direction des portions axiales rectilignes (20) à mesure que l'on se rapproche du trou central (6).

6. Lame de coupe selon la revendication 4 ou 5, **caractérisée en ce que** la distance entre les trous voisins (14) d'une même portion spirale (18) augmente à mesure que l'on se rapproche du trou central (6).

7. Lame de coupe selon une des revendications 4 à 6, **caractérisée en ce que** la distance entre les trous voisins (14) d'une même portion axiale (20) est égale.

8. Lame de coupe selon une des revendications 4 à 7, **caractérisée en ce que** les groupes de trous (12) présentent un écartement mutuel minimal qui est au moins égal à deux fois l'écartement maximal des trous voisins (14) sur les portions axiales (20).

9. Lame de coupe selon une des revendications 4 à 8, **caractérisée en ce que** le diamètre des trous sur les portions spirales (18) augmente en un pas ou en plusieurs pas de l'extérieur vers l'intérieur par rapport au trou central.

10. Lame de coupe selon une des revendications 1 à 9, **caractérisée en ce que** les trous (14) possèdent un diamètre compris entre 4,5 et 6,5 mm.

11. Lame de coupe selon une des revendications 1 à 10, **caractérisée en ce que** la perforation intermédiaire présente radialement un écartement minimal égal à un tiers du rayon de la lame de coupe (2) par rapport à un axe de rotation (10) de la lame de coupe (2).

12. Lame de coupe selon une des revendications 1 à 11, **caractérisée en ce que** les segments de coupe (4) sont formés par des contre-dépouilles (5) ménagées dans la périphérie extérieure de la lame de coupe (2), et un trou intermédiaire (22) est prévu entre deux contre-dépouilles voisines (5), les trous intermédiaires (22) présentant des écartements mutuels différents.

13. Lame de coupe selon la revendication 12, **caractérisée en ce que** les trous intermédiaires (22) possèdent une symétrie de révolution.
